# EUROPÄISCHE PATENTSCHRIFT

(11) **EP 3 818 831 B1**
(45) Veröffentlichungstag und Bekanntmachung des Hinweises auf die Patenterteilung: **26.04.2023**
(21) Anmeldenummer: 20191591.5
(22) Anmeldetag: 18.08.2020
(51) Int. Cl.: A22C 11/02

(54) **DARMHALTEVORRICHTUNG FÜR EINE VORRICHTUNG ZUM FÜLLEN SCHLAUCHFÖRMIGER HÜLLEN**
CASING HOLDING DEVICE FOR A DEVICE FOR FILLING TUBULAR CASINGS
DISPOSITIF DE MAINTIEN DE BOYAU POUR UN DISPOSITIF DE REMPLISSAGE D'ENVELOPPES TUBULAIRES

(30) Priorität: 06.11.2019 DE 202019106178 U
(43) Veröffentlichungstag der Anmeldung: 12.05.2021
(73) Patentinhaber: VEMAG Maschinenbau GmbH, 27283 Verden/Aller (DE)
(72) Erfinder: Franz, Gerhard, 27299 Langwedel (DE); Hiller, Klaus, 27313 Dörverden (DE); Walger, Johann, 27299 Langwedel (DE)
(74) Vertreter: Eisenführ Speiser

(56) Entgegenhaltungen:
- EP-A1- 0 232 812
- EP-B2- 2 227 963
- DE-A1-102008 031 019

## Beschreibung

Die Erfindung bezieht sich auf eine Darmhalteeinrichtung für eine Vorrichtung zum Füllen schlauchförmiger Hüllen mit einer pastösen Lebensmittelmasse, mit einer Darmbremse, die im Betrieb in einer Portionierposition mit einer auf ein Füllrohr gezogenen Hülle in Kontakt steht und eine Anpresskraft zwischen Hülle und Füllrohr erzeugt, einem beweglichen Halteteil zum Halten der Darmbremse, und einer Verstelleinrichtung zum Bewegen der Darmbremse zwischen der Portionierposition und einer Darmwechselposition, in der die Darmbremse vom Füllrohr entkoppelt ist, wobei die Verstelleinrichtung ein mehrere Gelenke aufweisendes Führungsgetriebe aufweist, welches dazu eingerichtet ist, die Darmbremse in zumindest einer ersten Phase der Bewegung aus der Portionierposition in die Darmwechselposition, im Wesentlichen axial zur Längsachse des Füllrohres zu bewegen und die Darmbremse in zumindest einer zweiten Phase der Bewegung zur Längsachse des Füllrohres zu verschwenken.

Darmhalteeinrichtungen sind aus dem Stand der Technik im Zusammenhang mit sogenannten Füllmaschinen bekannt und werden beim Befüllen von schlauchförmigen Hüllen mit einer pastösen Lebensmittelmasse, wie beispielsweise Wurstbrät oder dergleichen, eingesetzt. Die mit der Lebensmittelmasse zu befüllenden Hüllen werden nacheinander auf ein Füllrohr einer Füllvorrichtung bzw. Füllmaschine aufgezogen. Die Darmhalteeinrichtung wird mit dem freien Ende des mit der Hülle bestückten Füllrohres in Kontakt gebracht. Die Darmhalteeinrichtung steht im Betrieb, insbesondere in einer Portionierposition, mit ihrer Darmbremse mit einer auf dem Füllrohr aufgezogenen gerafften Hülle (auch geraffter Darm genannt) in Kontakt, welche eine Anpresskraft zwischen Hülle und Füllrohr erzeugt. Beim Befüllen der Hülle, welche ein Natur- oder Kunstdarm sein kann, erfolgt damit ein kontrolliertes Abziehen des Hüllenabschnittes

Während des Füllvorganges wird die Hülle somit straff gehalten, womit unter anderem ein gleichmäßiger Befüllgrad der Hülle erreicht werden kann.

Die Darmbremse umschließt das freie Ende des Füllrohres und damit auch die auf das Füllrohr aufgezogenen Hülle. Nach dem Befüllen der Hülle ist ein Hüllenwechsel notwendig, d.h. dass eine neue geraffte Hülle auf das Füllrohr aufgezogen wird, wobei die Darmbremse üblicherweise aus der Portionierposition am Ende des Füllrohres in eine Darmwechselposition bewegt wird. In der Darmwechselposition ist das Füllrohr zum Aufziehen einer neuen schlauchförmigen Hülle zugänglich. Um die Darmbremse in die Darmwechselposition bewegen zu können, weist die Darmhalteeinrichtung ferner eine Verstelleinrichtung zum Bewegen der Darmbremse bzw. eines die Darmbremse aufnehmenden Halteteiles von der Portionierposition in die Darmwechselposition auf.

Aus DE 10 2007 061 119 A1 ist beispielsweise eine Darmhalteeinrichtung mit einer Darmbremse offenbart. Die Darmbremse ist an einem Stützglied aufgenommen, das schwenkbar an einem etwa parallel zum Füllrohr verlaufenden Auslegerarm angeordnet ist. Die Darmbremse führt beim Bewegen aus der Portionierposition in die Darmwechselposition ausschließlich eine Schwenkbewegung mit einem gleichmäßigen Radius aus.

Aus EP 2 227 963 B2 ist eine Haltevorrichtung mit einer Darmbremse bekannt, wobei die Darmbremse mit dem freien Ende eines Füllrohres in Kontakt gebracht und eine Darmraupe während des Befüllvorganges mit Wurstbrät unter Spannung hält. Ein die Darmbremse aufnehmendes Halteteil ist mittels einer Kulissenführung beweglich gelagert, mittels derer die Darmbremse zunächst in Achsrichtung des Füllrohres bewegt und dann aus der Längsachse des Füllrohres heraus geschwenkt wird. Kulissenführungen bedingen häufig größere Reibung.

Ferner offenbart EP 0 232 812 A1 und DE 10 2008 931 019 A1 jeweils Haltevorrichtung für Darmbremsen an einer Füllmaschine. In EP 0 232 812 A1 wird die Darmbremse um eine Drehachse verschwenkt, die parallel zum Füllrohr verläuft. In DE 10 2008 931 019 A1 ist die Darmbremse über ein Drehgelenk verschwenkbar an einem feststehenden Tragabschnitt aufgenommen.

Aufgabe der vorliegenden Erfindung ist es, eine Darmhalteeinrichtung sowie eine Füllvorrichtung für schlauchförmige Hüllen anzugeben, mittels denen das Bewegen der Darmbremse zwischen der Portionierposition und der Darmwechselposition weiter vereinfacht ist.

Die Erfindung löst die ihr zugrundeliegende Aufgabe bei einer Darmhalteeinrichtung für eine Vorrichtung zum Füllen schlauchförmiger Hüllen mit einer pastösen Lebensmittelmasse, mit den Merkmalen von Anspruch 1. Insbesondere ist das mehrere Gelenke aufweisende Führungsgetriebe als Viergelenk-Getriebe ausgebildet, welches dazu eingerichtet ist, die Darmbremse auf einer vorgegebenen Kurvenbahn mit einem im Wesentlichen geradlinigen Bahnabschnitt und einem gekrümmten Bahnabschnitt zu bewegen.

Erfindungsgemäß wird hier mittels des mehrere Gelenke aufweisenden Führungsgetriebes der Ansatz verfolgt, eine vereinfachte Bewegung der Darmbremse von der Portionierposition in die Darmwechselposition zu ermöglichen. Insbesondere ist mittels des mehrere Gelenke aufweisenden Führungsgetriebes eine verringerte Kraft und damit verringerte Energie beim manuellen Betätigen der Darmhalteeinrichtung notwendig, um die Darmbremse und insbesondere die, die Darmbremse tragenden Bauteile der Darmhalteeinrichtung, aus der Portionierposition in die Darmwechselposition zu überführen, denn die Reibungskräfte sind erfindungsgemäß gering. Mittels des mehrgelenkigen Führungsgetriebes wird in der ersten Phase der Bewegung das Halteteil mit der Darmbremse im Wesentlichen axial zur Längsachse des Füllrohres verfahren und in einer zweiten Phase der Bewegung das Füllrohr aus der Längsachse des Füllrohres heraus verschwenkt. Der Bewegungsablauf ist präzise geführt und kann mit geringem Aufwand rasch durchgeführt werden.

Vorliegend definiert das Bewegen der Darmbremse aus der Portionierposition in die Darmwechselposition eine Entkopplungsbewegung. Das Zurückbewegen der Darmbremse aus der Darmwechselposition in die Portionierposition definiert eine Kopplungsbewegung. Mit dem erfindungsgemäßen mehrere Drehgelenke aufweisenden Führungsgetriebe ist sowohl eine vereinfachte Entkopplungs- als auch eine vereinfachte Kopplungsbewegung der Darmbremse von und mit dem Füllrohr möglich. Bei der mittels des Führungsgetriebes umgesetzten Kopplungsbewegung wird die Darmbremse im Gegensatz zur Entkopplungsbewegung, in der zweiten Phase der Kopplungsbewegung im Wesentlichen axial zur Längsachse des Füllrohres bewegt und damit bevorzugt wieder mit einer auf das Füllrohr aufgezogenen Hülle in Kontakt bzw. Anlage gebracht.

Mit dem erfindungsgemäßen Vorsehen eines Viergelenk-Getriebes, auch bezeichnet als Viergelenkkinematik, ist eine einfache Ausgestaltung eines Führungsgetriebes erreicht. Das Viergelenk-Getriebes ermöglicht eine Bewegung der

Darmbremse auf einer bevorzugt vorgegebenen festen Bahn. Bevorzugt weist das Viergelenk-Getriebe vier Drehgelenke auf, welche mindestens einen Freiheitsgrad aufweisen. Vorzugsweise weist die Kurvenbahn, auf der die Darmbremse bewegt wird, zwei Bahnabschnitte auf, die unterschiedlich große Bewegungsradien haben. Der im Wesentlichen geradlinige Bahnabschnitt weist auf den ersten 20 bis 40 mm der Entkopplungsbewegung (während der Kopplungsbewegung sind es die letzten 20 bis 40 mm) einen Bewegungsradius von größer 2500 mm, bevorzugt von etwa 3500 mm auf. Während der Bewegung der Darmbremse relativ zum Füllrohr entlang des ersten, geradlinigen Bahnabschnittes tritt damit nur ein geringer seitlicher Versatz zur Längsachse des Füllrohres auf, wodurch beim Abziehen und Aufschieben der Darmbremse von und auf das Füllrohr ein nachteiliges Verformen des Füllrohrendes vermieden wird.

Vorzugsweise weist das mehrere Gelenke aufweisende Führungsgetriebe mindestens ein feststehendes Gestell, zwei jeweils über ein Drehgelenk am Gestell beweglich angelenkte Kurbelarme und ein die Kurbelarme über zwei weitere Drehgelenke verbindendes Koppelteil auf. Bevorzugt sind an der Darmhalteeinrichtung ein erstes und ein zweites ortsfest angeordnetes Drehgelenk vorgesehen, mit denen die zwei beweglich angelenkten Kurbelarme verbunden sind. Der Abstand zwischen den ersten und zweiten ortsfest angeordneten Drehgelenken ist unveränderlich. Beide beweglich angelenkten Kurbelarme sind zudem über ein Koppelteil miteinander verbunden, wobei das Koppelteil mit den beweglichen Kurbelarme über ein drittes und viertes Drehgelenk befestigt ist. Dadurch ist die Beweglichkeit des Führungsgetriebes entlang einer vorgegebenen Kurvenbahn erreicht. Bevorzugt weisen die vier Drehgelenke jeweils nur einem Freiheitsgrad auf, wodurch die Darmbremse, bzw. ein die Darmbremse aufnehmendes Halteteil, in einer festen Ebene auf einer vorgegebenen Höhe zum Füllrohr bewegbar ist.

Eine bevorzugte Weiterbildung der erfindungsgemäßen Darmhalteeinrichtung sieht vor, dass die Darmbremse, bevorzugt ein die Darmbremse aufnehmendes bewegbares Halteteil, fest mit dem Koppelteil des Viergelenk-Getriebes verbunden ist. Damit ist eine größtmögliche Bewegungsfreiheit der Darmbremse oder des die Darmbremse aufnehmenden Halteteils gewährleistet. Vorliegend sind die Abstände zwischen den ortsfesten Drehgelenken sowie die Längen der an den ortsfesten Drehgelenken beweglich angelenkten Kurbelarme und des die Kurbelarme über Drehgelenke miteinander verbundenen Koppelteiles derart aufeinander abgestimmt und das Gestell des erfindungsgemäßen Führungsgetriebes so zum Füllrohr ausgerichtet, dass die Darmbremse in der ersten Phase der Entkopplungsbewegung und der zweiten Phase der Kopplungsbewegung im Wesentlichen axial zur Längsachse des Füllrohres bewegt wird.

Gemäß einer bevorzugten Weiterbildung weist die Verstelleinrichtung eine mit dem mehrgelenkigen Führungsgetriebe verbundene Hebelmechanik als Betätigungseinheit für das Führungsgetriebe auf. Mithilfe der erfindungsgemäßen Hebelmechanik kann der Kraftaufwand zum Betätigen des Führungsgetriebes weiter verringert werden, wodurch die Handhabbarkeit der erfindungsgemäßen Halteeinrichtung während des Darmwechselvorganges weiter verbessert ist. Zudem ist die erfindungsgemäße Darmhalteeinrichtung bevorzugt von Hand, bzw. manuell betätigbar. Dadurch wird mittels einer solch erfindungsgemäßen Darmhalteeinrichtung der steuerungstechnische Aufwand an einer Füllvorrichtung zum Füllen schlauchförmiger Hüllen verringert.

Vorzugsweise ist die Hebelmechanik mit einem der Kurbelarme oder dem Koppelteil des Führungsgetriebes beweglich verbunden. Durch das bewegliche Koppeln ist erreicht, dass die Hebelmechanik nahezu unabhängig von der durch das Führungsgetriebe vorgegebenen Kurvenbahn betätigt werden kann. Bevorzugt greift die Hebelmechanik am Koppelteil bzw. dem beweglichen Ende eines der Kurbelarme an. Damit ist eine bevorzugt effiziente Kraftübertragung der an der Hebelmechanik angreifenden Betätigungskraft in die auf das Führungsgetriebe einwirkende Verstellkraft erreicht.

Vorzugsweise weist die Hebelmechanik zwei beweglich miteinander verbundene Hebelarme auf, wobei ein erster Hebelarm mit einem Ende schwenkbar an einem ortsfesten Drehlager angeordnet ist und der zweite Hebelarm mit seinem freien Ende drehbar mit dem Koppelteil verbunden ist. Die Ausgestaltung der Hebelmechanik mit zwei beweglich miteinander verbundenen Hebelarmen birgt den Vorteil, dass auf das Führungsgetriebe mit einer die Betätigungskraft verstärkenden Hebelwirkung eingewirkt werden kann. Zudem kann mit dem Verstellen des Führungsgetriebes über die Hebelarme eine auftretende Abstandsänderung zum ortsfesten Drehlager der Hebelmechanik als Einleitungspunkt für die Betätigungskraft einfach ausgleichen werden. Mittels der beweglich miteinander verbundenen Hebelarme der Hebelmechanik und der Kurbelarme des Führungsgetriebes kann ferner bevorzugt ein vorteilhaft wirkendes Übersetzungsverhältnis erzeugt werden. Bevorzugt wirken die Hebelmechanik und das Führungsgetriebe derart miteinander, dass diese dazu eingerichtet sind, ein ungleichmäßiges Übersetzungsverhältnis mit einer nicht linearen Übertragungsfunktion auszubilden. Demnach führt die Darmbremse, wenn die Betätigungsbewegung an der Hebelmechanik in gleichgroße Längen- oder Winkelabschnitte unterteilt wird, entlang der aufeinanderfolgenden Betätigungsabschnitte unterschiedlich große Bewegungen aus.

Vorzugsweise ist zudem mittels der erfindungsgemäßen Hebelmechanik eine vorteilhafte Wandlung einer als Drehbewegung vorliegenden Betätigungskraft in eine im Wesentlichen translatorische Bewegung an der Abtriebsseite der Hebelmechanik möglich. Gemäß einer bevorzugten Ausführung der erfindungsgemäßen Darmhalteeinrichtung ist die Hebelmechanik antriebsseitig mit einem manuell betätigbaren Handhebel drehgebend gekoppelt. Vorzugsweise ist der von Hand betätigbare Handhebel direkt oder indirekt mit der Hebelmechanik über das ortsfeste Drehlager der Hebelmechanik gekoppelt. Vorzugsweise ist das eine Ende des Handhebels drehbar gelagert. Zum Verstellen der Hebelmechanik wird der Handhebel vorzugsweise in einer horizontal verlaufenden Ebene um ein vorbestimmtes Winkelmaß verschwenkt.

In einer weiteren Ausgestaltung der Halteeinrichtung ist vorgesehen, dass mittels der Hebelmechanik eine Kniehebel-Klemme zum Arretieren des Führungsgetriebes in der Portionierposition der Darmbremse am Füllrohr ausgebildet ist. Mithilfe der Kniehebel-Klemme ist bevorzugt bewirkt, dass die Darmbremse sich nicht selbsttätig aus ihrer Portionierposition am Füllrohr herausbewegt. Daher kann auf die Ausgestaltung einer separaten Arretiereinrichtung, mit der die Darmbremse bzw. das die Darmbremse aufnehmende Halteteil, relativ zur Halteeinrichtung fixiert wird, verzichtet werden. Das Arretieren der erfindungsgemäßen Halteeinrichtung erfolgt demnach selbsttätig mit dem Bewegen der Darmbremse in die Portionierposition. Das Aufheben der Arretierung wird durch das Herausbewegen der Darmbremse aus der Portionierposition in Richtung der Darmwechselposition erreicht. Vorzugsweise sind die Hebelarme der Kniehebelmechanik dazu derart zueinander angeordnet, bzw. ausgerichtet, dass diese zu Beginn der Entkopplungsbewegung und am Ende der Kopplungsbewegung über einen zwischen beiden Hebelarmen der Hebelmechanik wirkenden Totpunkt gefahren werden, indem die Längsachsen der Hebelarme kurzzeitig deckungsgleich zueinander ausgerichtet sind. Zudem weisen die Hebelarme in ihrer Totpunktstellung einen geringfügigen Längenversatz zueinander auf, durch den eine beim Durchfahren der Totpunktstellung zu überwindende Gegenkraft erzeugt wird. Diese Gegenkraft bildet gleichzeitig die Arretierkraft für das Halten des Führungsgetriebes in der Portionierposition der Darmbremse.

Gemäß einer bevorzugten Weiterbildung ist zwischen der Hebelmechanik und dem Handhebel ein Übersetzungsgetriebe zwischengeschaltet, bevorzugt ein Stirnradgetriebe. Mithilfe des Übersetzungsgetriebes erfolgt bevorzugt eine Übersetzung der Betätigungskraft am Handhebel in eine auf die Hebelmechanik wirkenden Verstellkraft. Vorliegend wird zudem mittels des Übersetzungsgetriebes eine Änderung in der Bewegungsrichtung vom Handhebel auf den mindestens einen Hebelarm der Hebelmechanik erreicht. Dieser führt dann eine Schwenkbewegung aus, die jeweils entgegengesetzt zur Schwenkbewegung des Handhebels ist. Vorzugsweise wird ein einstufiges Stirnradgetriebe mit zwei Stirnrädern verwendet. Das antriebsseitige Stirnrad ist drehfest mit dem drehbeweglich gelagerten Ende des Handhebels gekoppelt und das abtriebsseitige Stirnrad ist drehfest mit dem Antriebshebel der Hebelmechanik verbunden.

Vorzugsweise weist die Darmhalteeinrichtung ein Halteteil mit einem Auslegerarm und eine in der Portionierposition etwa senkrecht zum Auslegerarm verlaufende Kopfplatte für die Darmbremse auf. Mittels des Auslegerarmes und der senkrecht dazu verlaufenden Kopfplatte ist eine Stützstruktur für die bevorzugt drehbar an der Kopfplatte aufgenommene Darmbremse ausgebildet. Mittels des Halteteiles soll gewährleistet werden, dass die Darmbremse mit ihrer Aufnahmeöffnung bevorzugt koaxial zur Längsachse des Füllrohres angeordnet ist. In einer Ausführungsform der vorliegenden Erfindung ist der gesamte Auslegerarm mit der daran angeordneten Kopfplatte mittels des Führungsgetriebes bewegbar aufgenommen. Vorzugsweise ist der Auslegerarm der Darmhalteeinrichtung mit einem Abdrehgetriebe einer Vorrichtung zum Füllen von schlauchförmigen Hüllen koppelbar, mittels dem die Darmbremse bevorzugt getaktet angetrieben wird. Am Auslegerarm und der Kopfplatte sind entsprechende Übertragungsmittel für eine vom Abdrehgetriebe in Richtung der Darmbremse zu übertragende Antriebsbewegung angeordnet.

In einer bevorzugten Ausgestaltung der Darmhalteeinrichtung ist das Führungsgetriebe in einem Kupplungsbereich eines Auslegerarmes angeordnet, der einen ersten feststehenden Armabschnitt und einen mittels des Führungsgetriebes relativ zum ersten Armabschnitt beweglichen, zweiten Armabschnitt aufweist. Statt den ganzen Auslegerarm mittels der am Ende des Auslegerarmes angeordneten Kopfplatte zu bewegen, ist erfindungsgemäß vorgesehen, nur einen Abschnitt, nämlich einen bewegbaren zweiten Armabschnitt zu einem ersten feststehenden Armabschnitt des Auslegerarmes zu bewegen. Dadurch sind die seitens des Führungsgetriebes aufzunehmenden Stützkräfte verringert. Zudem ermöglicht das Anordnen des Führungsgetriebes entlang eines Abschnitts des Auslegerarmes eine vereinfachte Ausgestaltung eines Kupplungsbereiches zwischen den miteinander in Anlage zu bringenden Armabschnitten des Auslegerarmes. Zudem ist auch die Ausgestaltung der Übertragungsmittel des Abdrehgetriebes an den Auslegerarmen zum Übertragen der Antriebsbewegung in Richtung der Darmbremse vereinfacht. Bevorzugt ist der Kupplungsbereich auf etwa der Hälfte des Auslegerarmes ausgebildet.

Zum Übertragen der Antriebsbewegung vom Abdrehgetriebe in Richtung der Darmbremse ist an einander zugewandten Enden von erstem und zweitem Armabschnitt des Auslegerarmes jeweils ein Kupplungsteil vorgesehen, mittels derer bevorzugt eine Steckkupplung zum Übertragen einer Antriebsbewegung auf die bevorzugt am Halteteil beweglich aufgenommene Darmbremse ausgebildet ist. Die Kupplungsteile am ersten und zweiten Armabschnitt weisen, wenn die Kupplungsteile miteinander in Anlage stehen und damit die Darmbremse in der Portionierposition ist, bevorzugt ineinandergreifende Formschlusselemente auf, welche eine Relativbewegung in Umfangsrichtung der Kupplungsteile zueinander behindern. Vorzugsweise lassen diese eine Relativbewegung der Kupplungsteile in axialer Richtung zu. Bevorzugt sind die miteinander in der Portionierposition in Eingriff stehenden Formschlusselemente der Kupplungsteile als Hirth-Verzahnung ausgebildet. Damit ist ein vereinfachtes In- und Außer-Eingriff-Bringen der Formschlusselemente mit- und voneinander erreicht.

Gemäß einer bevorzugten Weiterbildung der Darmhalteeinrichtung ist vorgesehen, dass die Verstelleinrichtung zum Bewegen der Darmbremse manuell betätigbar ausgebildet ist. Gemäß einem weiteren Aspekt betrifft die vorliegende Erfindung eine Vorrichtung zum Füllen von schlauchförmigen Hüllen mit einer pastösen Masse, insbesondere von Darmraupen mit Wurstbrät, mit zumindest einem Füllrohr, auf das eine mit der Masse befüllbare Hülle aufziehbar ist, wobei ein Ende an einem Aufnahmeteil bevorzugt um seine Längsachse dreh- und antreibbar gelagert ist und mit einer Darmhalteeinrichtung nach einem der vorstehend bevorzugten Ausführungsformen, welche dem freien Ende des Füllrohres zugeordnet ist.

Die erfindungsgemäße Vorrichtung zum Füllen von schlauchförmigen Hüllen, auch bezeichnet als Füllmaschine, löst die eingangs beschriebene Aufgabe mit einer erfindungsgemäß ausgebildeten Darmhalteeinrichtung, die im Betrieb der Vorrichtung mit ihrer Darmbremse in zumindest einer ersten Phase einer Entkopplungsbewegung, also wenn die Darmbremse von ihrer Portionierposition in die Darmwechselposition überführt wird, eine im Wesentlichen axiale Bewegung zur Längsachse des Füllrohres ausführt. Indem die Darmbremse in axialer Richtung zur Längsachse des Füllrohres bewegt wird, solange die Darmbremse in Eingriff mit dem Füllrohr steht, werden Schäden an der Darmbremse und dem Füllrohr bevorzugt vermieden. Dabei ist vorliegend unter einer im Wesentlichen axialen Bewegung der Darmbremse auch eine Bewegung entlang der Längsachse des Füllrohres zu verstehen, die geringfügig von einer idealisiert axialen Bewegung entlang des Füllrohres abweicht. Vorzugsweise ist zu gewährleisten, dass mit der vom Füllrohr zu entkoppelnden Darmbremse, bzw. während der nach dem Darmwechsel erfolgenden Kopplungsbewegung der Darmbremse in Richtung des Füllrohres, eine übermäßige Versatzbewegung der Darmbremse senkrecht zur Längsachse des Füllrohres vermieden wird.

Bevorzugt ist das Füllrohr der erfindungsgemäßen Vorrichtung antreibbar ausgebildet, wodurch mit der ebenfalls antreibbaren Darmbremse mit dem Befüllen der Hülle entlang der gefüllten Hülle nacheinander mehrere Abdrehstellen erzeugt werden und somit die gefüllte schlauchförmige Hülle in vorbestimmten Abständen in einzelne Wurstabschnitte unterteilt wird.

Gemäß einer bevorzugten Ausgestaltung weist die erfindungsgemäße Vorrichtung ein Rahmengestell auf, an dem die Darmhalteeinrichtung, bevorzugt mittels eines Halteteiles der Darmhalteeinrichtung, angeordnet ist. Das Rahmengestellt bildet die Grundstruktur der erfindungsgemäßen Füllvorrichtung, an dem bevorzugt die wesentlichen Bauteile der Vorrichtung, wie auch die Darmhalteeinrichtung, angeordnet sind. Gemäß einer bevorzugten Ausführungsform weist das Halteteil einen Auslegerarm auf, der etwa parallel zum Füllrohr ausgerichtet ist. Ferner weist der Auslegerarm eine Länge auf, die etwa der Länge des dreh- bzw. antreibbaren Füllrohres an der Füllmaschine entspricht. Am Ende des Auslegerarmes ist die Kopfplatte mit der darin drehbar aufgenommenen Darmbremse angeordnet. Die Kopfplatte erstreckt sich bevorzugt senkrecht zum Auslegerarm der erfindungsgemäßen Halteeinrichtung und zum Füllrohr der Füllvorrichtung.

Gemäß einer bevorzugten Weiterbildung der erfindungsgemäßen Füllvorrichtung umfasst diese ferner eine Abdreheinrichtung zum Antreiben der Darmbremse und/oder einen Fülltrichter zum Aufnehmen der pastösen Masse und/oder eine Förderpumpe zum Fördern der pastösen Masse. Die Abdreheinrichtung ist bevorzugt am Rahmengestell im Ansetzbereich des Auslegerarmes der erfindungsgemäßen Halteeinrichtung angeordnet. Die Abdreheinrichtung treibt die Darmbremse über einen entsprechend am Auslegerarm und der Kopfplatte ausgebildeten Antriebsstrang an. Vorzugsweise weist der Auslegerarm als Antriebsstrang eine im Inneren des Auslegerarmes drehbar aufgenommene Antriebswelle auf. An der Kopfplatte ist ein Riementrieb vorgesehen, der mit der drehbar angeordneten Darmbremse gekoppelt ist. Die Rotationsachsen der Darmbremse und des Antriebswellenabschnitts, der am verschwenkbaren Auslegerarm der Darmhalteeinrichtung angeordnet ist, verlaufen bevorzugt parallel zueinander. Der Fülltrichter an der Füllmaschine bildet ein Aufnahmereservoir bzw. einen Zwischenspeicher für eine zu verarbeitende Fleischmasse aus. Der Fülltrichter ist fluidleitend mit einer nachgeschalteten Förderpumpe gekoppelt, mittels der die in den Fülltrichter eingegebene pastöse Lebensmittelmasse in Richtung des Füllrohres der Füllmaschine geleitet wird. Vorzugsweise weist die Füllmaschine als Förderpumpe eine Schneckenpumpe, eine Doppelspindelpumpe, eine Zahnradpumpe oder eine Flügelzellenpumpe zum Fördern der Lebensmittelmasse auf. Mithilfe der Förderpumpe kann die Lebensmittelmasse im Wesentlichen kontinuierlich, getaktet oder oszillierend in Richtung des Füllrohres gefördert werden.

Die zur erfindungsgemäßen Darmhalteeinrichtung beschriebenen bevorzugten Ausführungsformen, bzw. Weiterbildungen, sind zugleich auch bevorzugte Ausführungsformen der erfindungsgemäßen Vorrichtung zum Füllen schlauchförmiger Hüllen. Zur Füllvorrichtung beschriebene bevorzugte Ausführungsformen sind zugleich auch bevorzugte Ausführungsformen der erfindungsgemäßen Darmhalteeinrichtung, sofern sie sich nicht von vornherein widersprechen.

Die Erfindung wird im Folgenden anhand eines bevorzugten Ausführungsbeispiels unter Bezugnahme auf die beigefügten Figuren näher beschrieben. Hierbei zeigen:
- Fig. 1:: eine perspektivische Ansicht einer Füllvorrichtung bzw. Füllmaschine zum Herstellen eines Stranges aus einer Lebensmittelmasse mit einer erfindungsgemäßen Darmhalteeinrichtung;
- Fig. 2:: eine perspektivische Ansicht der erfindungsgemäßen Darmhalteeinrichtung nach Fig. 1;
- Fig. 3 und 4:: Ansichten der erfindungsgemäßen Darmhalteeinrichtung in verschiedenen Betriebsstellungen bezogen auf ein Füllrohr der Füllvorrichtung;
- Fig. 5:: eine Schnittdarstellung der erfindungsgemäßen Darmhalteeinrichtung und
- Fig. 6:: eine überlagerte Ansicht der Abteilvorrichtung zur Darstellung der mittels des erfindungsgemäßen Führungsgetriebes umgesetzten Kurvenbahn.

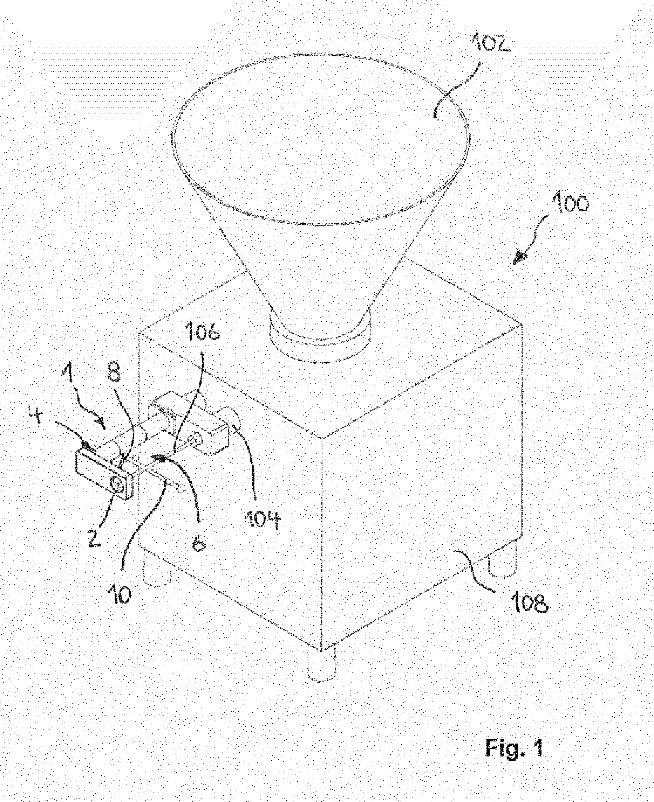

Fig. 1 zeigt eine Maschine zum Herstellen eines Stranges aus einer Lebensmittelmasse, insbesondere eine Füllmaschine 100 zum Füllen schlauchförmiger Hüllen, wie beispielsweise Kunst- und/oder Naturdärmen. An der Füllmaschine 100 ist ein Fülltrichter 102 zum Eingeben der zu verarbeitenden Lebensmittelmasse vorgesehen. Innerhalb der Füllmaschine 100 ist eine nicht näher gezeigte Förderpumpe angeordnet. Mittels der Förderpumpe wird die zu verarbeitende Masse in Richtung eines Extrusionskopfes 104 und eines am Extrusionskopf drehbar angeordneten Füllrohres 106 gefördert.

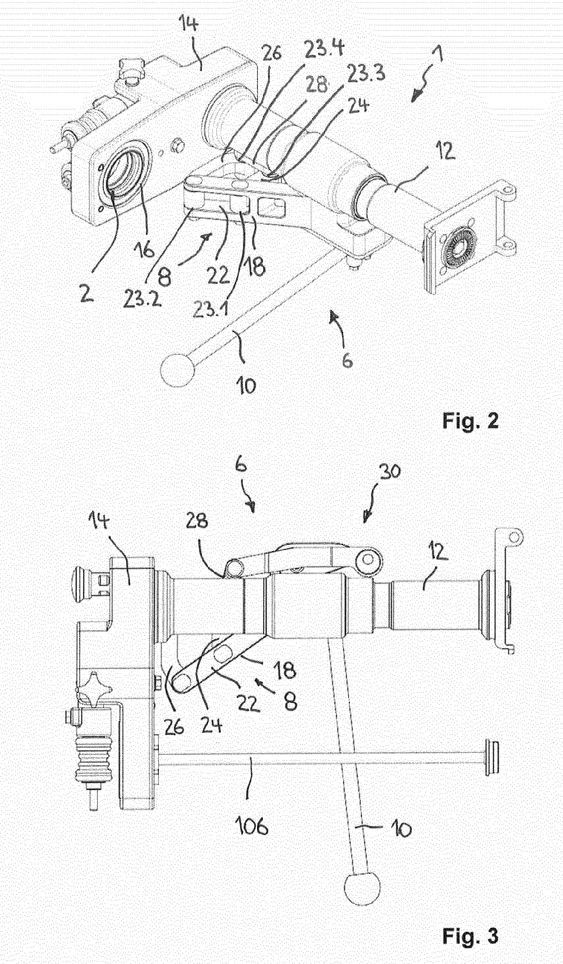

An der Füllmaschine 100 ist eine Darmhalteeinrichtung 1 angeordnet, welche eine Darmbremse 2 umfasst, die im Betrieb der Füllmaschine 100 mit einer auf dem Füllrohr 106 aufgezogenen Hülle in Kontakt steht und eine Anpresskraft zwischen Hülle und Füllrohr erzeugt. Die Darmbremse 2 ist über ein Halteteil 4 aufgenommen, mittels dem die Darmbremse 2 in einer vorbestimmten Ausrichtung zum Füllrohr 106 gehalten wird. Ferner umfasst die Darmhalteeinrichtung 1 eine Verstelleinrichtung 6 zum Bewegen der Darmbremse 2. Die Verstelleinrichtung 6 ist dazu eingerichtet, die Darmbremse zwischen ihrer Portionierposition am Ende des Füllrohres 106 und einer Darmwechselposition, in der die Darmbremse 2 vom Füllrohr 106 entkoppelt ist, auf einer vorgegebenen Bahn zu bewegen. Die Verstelleinrichtung 6 umfasst ein mehrere Gelenke aufweisendes Führungsgetriebe 8 (Fig.2), mittels dem die Darmbremse 2 in zumindest einer ersten Phase einer Bewegung aus der Portionierposition in die Darmwechselposition im Wesentlichen axial zur Längsachse des Füllrohres bewegt und in zumindest einer zweiten Phase der Bewegung zur Längsachse des Füllrohres verschwenkt wird.

Das Führungsgetriebe 8 wird in der hier gezeigten Ausführungsform mittels einer Handhabe 10 betätigt. Die Handhabe 10 ist in der vorliegenden Ausführungsform als Handhebel ausgebildet. Insbesondere nachdem eine auf dem Füllrohr 106 aufgezogene befüllbare Hülle verarbeitet wurde, wird mittels des Handhebels 10 die Darmbremse 2 außer Kontakt mit dem Füllrohr gebracht, um eine neue geraffte Hülle zum Befüllen auf das Füllrohr 106 aufzuschieben.

Fig. 2 zeigt die erfindungsgemäße Darmhalteeinrichtung 1 mit ihrer Verstelleinrichtung 6 in einer Detailansicht, womit deren Funktionsweise verdeutlicht werden soll. Das Halteteil 4 mit der insbesondere daran drehbar aufgenommenen Darmbremse 2 weist einen Auslegerarm 12 auf, der bevorzugt parallel zur Längsachse des Füllrohres 106 verläuft. Am freien Ende des Auslegerarmes 12 ist eine Kopfplatte 14 angeordnet, welche etwa senkrecht zum Auslegerarm verläuft. An der Kopfplatte 14 ist ein Drehlager 16 für die daran beweglich aufgenommene Darmbremse 2 vorgesehen. Die Darmhalteeinrichtung 1 ist mit ihrem Auslegerarm 12 an einem Rahmengestell 108 der Füllmaschine 100 angeordnet. Zum Antreiben der Darmbremse 2 weist die Füllmaschine 100 eine nicht näher dargestellte Abdreheinrichtung auf.

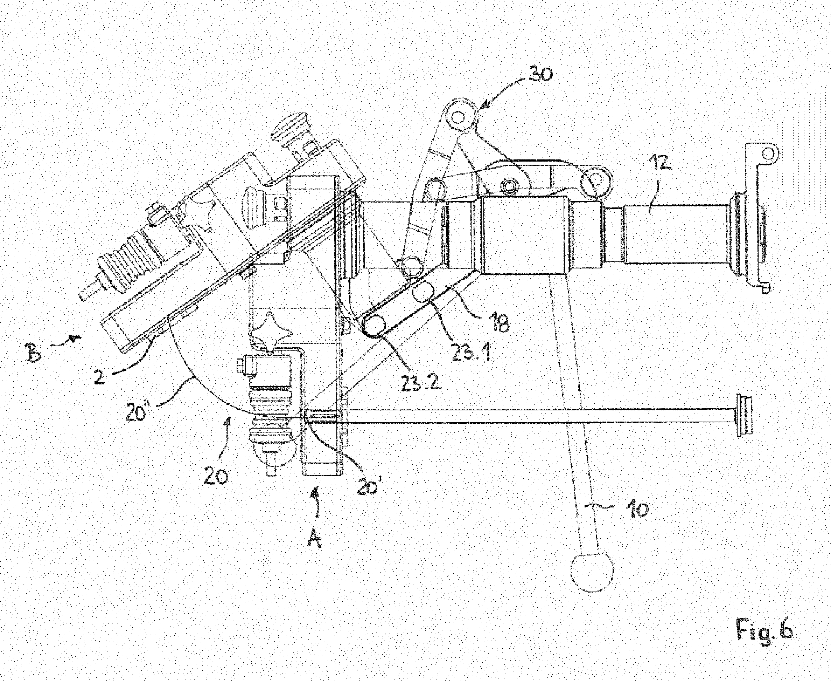

Wie aus Fig. 2 ferner ersichtlich, ist das Führungsgetriebe 8 als Mehrgelenk-Getriebe ausgebildet, insbesondere als Viergelenk-Getriebe 18. Das Viergelenk-Getriebe 18 ist dazu eingerichtet, die Darmbremse 2 zwischen der Portionierposition A und der Darmwechselposition B auf einer vorgegebenen Kurvenbahn 20 (Fig. 6) zu bewegen. Die in Fig. 6 gezeigte Kurvenbahn 20 beinhaltet einen im Wesentlichen geradlinigen Bahnabschnitt 20' und einen gekrümmten Bahnabschnitt 20". Das Führungsgetriebe 8, vorliegend das Viergelenk-Getriebe 18, umfasst mindestens ein feststehendes Gestell 22, zwei über ein erstes und ein zweites Drehgelenk 23.1, 23.2 am Gestell beweglich angelenkte Kurbelarme 24, 26 und ein Koppelteil 28, das über ein drittes und ein viertes Drehgelenk 23.3, 23.4 mit einem der Kurbelarme 24, 26 verbunden ist. Die Darmbremse2, insbesondere ein Abschnitt des Halteteils 4 für die Darmbremse 2, ist fest mit dem Koppelteil 28 des Viergelenk-Getriebes 18 verbunden. Das Viergelenk-Getriebe 18 mit seinen vier Drehgelenken 23.1 - 23.4 wird mittels der Handhabe 10 manuell betätigt. Mit Betätigen des Handhebels 10 führt ein Abschnitt des Auslegerarmes 12, die Kopfplatte 14 und die Darmbremse 2 in der ersten Bewegungsphase eine im Wesentlichen translatorische Bewegung aus. Erst in der zweiten Bewegungsphase wird die Darmbremse 2 mittels der Kurbelarme 24, 26 in einen Winkel geneigt zur Längsachse des Füllrohres 106 verschwenkt.

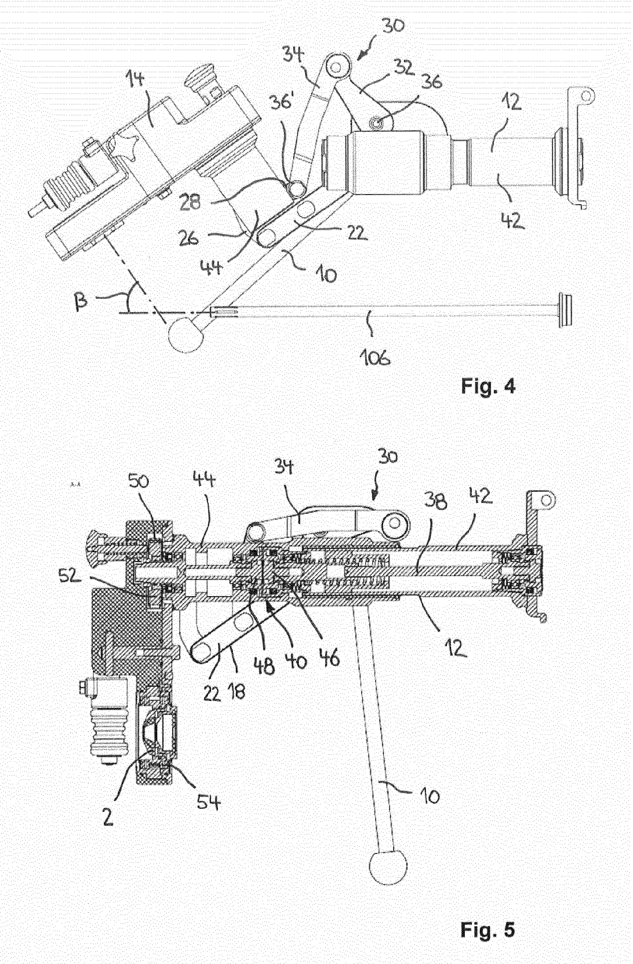

Wie die Fig. 3 und 4 ferner zeigen, weist die Verstelleinrichtung 6 eine mit dem Führungsgetriebe 8 verbundene Hebelmechanik 30 auf, welche dem Führungsgetriebe 8 und dem Handhebel 10 der Verstelleinrichtung 6 als eine Art Übersetzungsgetriebe zwischengeschaltet ist. Die Hebelmechanik 30 stellt eine antriebsmäßige Verbindung zwischen dem Handhebel 10 und dem beweglichen Kurbelarmen 24, 26 oder dem Koppelteil 28 des Führungsgetriebes 8 her. Die Hebelmechanik 30 weist, wie Fig. 4 zeigt, zwei beweglich miteinander verbundene Hebelarme 32, 34 auf. Ein erster Hebelarm 32 ist mit einem Ende an einem ortsfesten Drehlager 36 angeordnet und insbesondere über das Drehlager 36 schwenkbar aufgenommen. Der zweite Hebelarm 34 ist mit einem seiner Enden drehbar mit dem ersten Hebelarm 32 gekoppelt und mit dem entgegengesetzten Ende beweglich an einem weiteren Drehlager 36' am Koppelteil 28 angelenkt.

In der hier vorliegend ausgezeigten Ausführungsform wird mittels der Hebelmechanik 30 eine Kniehebel-Klemme ausgebildet, wodurch eine selbsthemmende Funktion der Verstelleinrichtung 6 bewirkt ist. Damit wird in der Portionierposition A (Fig. 3) die Darmbremse 2 selbsttätig am Füllrohr 106 das Führungsgetriebe 8 arretiert bzw. festgelegt. Die Darmbremse kann sich somit nicht von selbst aus der Portionierposition A am Füllrohr 106 bewegen. Die Kniehebel-Klemme wirkt in der gezeigten Ausführung gegen einen Anschlag an der Verstelleinrichtung 6. In einer nicht näher gezeigten Ausführungsform wird zur Kraftübertragung zwischen der Hebelmechanik 30 und dem Handhebel 10 ein Übersetzungsgetriebe in Form eines Stirnradgetriebes verwendet. Das Stirnradgetriebe dient zur vereinfachten Kraftübertragung und vorliegend eine Änderung der Bewegungsrichtung zwischen dem Handhebel 10 und dem ersten Hebelarm 32 der Hebelmechanik 30, welche in entgegengesetzte Richtungen verschwenkt werden. Bevorzugt weist, wie aus Fig 4 ersichtlich, die Mittenachse der Darmbremse 2 zur Längsachse des Füllrohres 106 in der Darmwechselposition einen Ausstellwinkel β im Bereich von ungefähr 30° bis 70° auf.

Fig. 5 zeigt eine Schnittdarstellung der erfindungsgemäßen Darmhalteeinrichtung 1, welche die zweiteilige Ausgestaltung des Auslegerarmes 12 und die Anordnung eines Antriebsstrang 38 zum Umsetzen der Abdrehbewegung an der Darmbremse 2 innerhalb des Auslegerarmes 12 zeigt. Der Auslegerarm 12 weist einen Kupplungsbereich 40 auf, mittels dem der Auslegerarm 12 in einen feststehenden, ersten Armabschnitt 42 und einen beweglichen, zweiten Armabschnitt 44 unterteilt ist. Entlang des Auslegerarmes 12 erstreckt sich der Antriebsstrang 38 als Antriebswelle. Im Kupplungsbereich 40 des Auslegerarmes 12 sind zwei miteinander in Eingriff bringbare Kupplungsteile 46, 48 vorgesehen, welche den Antriebstrang 38 unterteilen und koppeln.

Die Kupplungsteile 46, 48 weisen in einer nicht näher abgebildeten Ausführung an ihren einander zugewandten Stirnseiten ineinandergreifende Verrastelemente zur Ausbildung einer Formschlussverbindung zwischen den Kupplungsteilen 46, 48 auf. Mittels der Kupplungsteile 46, 48 wird eine Art Steckkupplung erzeugt. In der vorliegend gezeigten Ausführungsform ist mindestens eines der Kupplungsteile 46, 48 in axialer Richtung verstellbar innerhalb des ersten oder zweiten Armabschnittes des Auslegerarmes angeordnet. Damit ist eine Ausgleichbewegung beim Ein- und Auskuppeln der Kupplungsteile 46, 48 bewirkt. Das Übertragen der Antriebsbewegung vom Antriebsstrang 38 auf die Darmbremse 2 erfolgt in der gezeigten Ausführungsform mit Hilfe eines Antriebsriemens 50, der über eine Riemenscheibe 52 am Antriebsstrang 38 und über eine Riemenscheibe 54 an der Darmbremse 2 geführt wird.

In Fig. 6 sind die verschiedenen Betriebspositionen der Darmhalteeinrichtung einander überdeckend dargestellt, nämlich die Portionierposition A, in der die Darmbremse mit dem freien Ende des Füllrohres 106 zusammenwirkt und die Darmwechselposition B, in der die Darmbremse vom Füllrohr 106 entkoppelt ist. Zudem ist die mittels des Führungsgetriebes umsetzbare Kurvenbahn 20 der Darmbremse 2 mit ihrem im Wesentlichen geradlinigen Bahnabschnitt 20' und dem gekrümmten Bahnabschnitt 20" der Darmbremse 2 gezeigt.

### Bezugszeichenliste

- 1: Darmhalteeinrichtung
- 2: Darmbremse
- 4: Halteteil
- 6: Verstelleinrichtung
- 8: Führungsgetriebe
- 10: Handhabe
- 12: Auslegerarm
- 14: Kopfplatte
- 16: Drehlager
- 18: Viergelenk-Getriebe
- 20: Kurvenbahn
- 20', 20": Bahnabschnitt
- 22: Gestell
- 23.1: erstes Drehgelenk
- 23.2: zweites Drehgelenk
- 23.3: drittes Drehgelenk
- 23.4: viertes Drehgelenk
- 24, 26: Kurbelarm
- 28: Koppelteil
- 30: Hebelmechanik
- 32, 34: Hebelarm
- 36: Drehlager
- 38: Antriebsstrang
- 40: Kupplungsgereich
- 42,44: Armabschnitt
- 46,48: Kupplungsteil
- 50: Antriebsriemen
- 52, 54: Riemenscheibe
- 100: Füllmaschine
- 102: Fülltrichter
- 104: Extrusionskopf
- 106: Füllrohr
- 108: Rahmengestell
- A: Portionierposition
- B: Darmwechselposition

## Patentansprüche

1. Darmhalteeinrichtung (1) für eine Vorrichtung zum Füllen schlauchförmiger Hüllen mit einer pastösen Lebensmittelmasse, mit
- einer Darmbremse (2), die im Betrieb in einer Portionierposition (A) mit einer auf ein Füllrohr (106) gezogenen Hülle in Kontakt steht und eine Anpresskraft zwischen Hülle und Füllrohr (106) erzeugt, und
- einer Verstelleinrichtung (6) zum Bewegen der Darmbremse (2) zwischen der Portionierposition (A) und einer Darmwechselposition (B), in der die Darmbremse (2) vom Füllrohr (106) entkoppelt ist, wobei die Verstelleinrichtung (6) ein mehrere Gelenke aufweisendes Führungsgetriebe (8) aufweist, welches dazu eingerichtet ist, dass die Darmbremse (2) in zumindest einer ersten Phase der Bewegung aus der Portionierposition (A) in die Darmwechselposition (B) im Wesentlichen axial zur Längsachse des Füllrohres (106) bewegt wird, und in zumindest einer zweiten Phase der Bewegung zur Längsachse des Füllrohres (106) verschwenkt wird,
**dadurch gekennzeichnet,**
**dass** das Führungsgetriebe (8) als Viergelenk-Getriebe (18) ausgebildet ist, welches dazu eingerichtet ist, die Darmbremse (2) auf einer vorgegebenen Kurvenbahn (20) mit einem im Wesentlichen geradlinigen Bahnabschnitt (20`) und einem gekrümmten Bahnabschnitt (20") zu bewegen.

2. Darmhalteeinrichtung (1) nach Anspruch 1,
**dadurch gekennzeichnet, dass** das Führungsgetriebe (8) mindestens ein feststehendes Gestell (22), zwei jeweils über ein Drehgelenk (23.1, 23.2) am Gestell (22) beweglich angelenkte Kurbelarme (24, 26) und ein die Kurbelarme über zwei weitere Drehgelenke (23.3, 23.4) verbindendes Koppelteil (28) aufweist.

3. Darmhalteeinrichtung (1) nach Anspruch 2,
**dadurch gekennzeichnet, dass** die Darmbremse (2), bevorzugt ein die Darmbremse (2) aufnehmendes, bewegbares Halteteil (4), fest mit dem Koppelteil (28) des Viergelenk-Getriebes (18) verbunden ist.

4. Darmhalteeinrichtung (1) nach einem der vorstehenden Ansprüche,
**dadurch gekennzeichnet, dass** die Verstelleinrichtung (6) eine mit dem Führungsgetriebe (8) verbundene Hebelmechanik (30) als Betätigungseinheit für das Führungsgetriebe (8) aufweist.

5. Darmhalteeinrichtung (1) nach Anspruch 4,
**dadurch gekennzeichnet, dass** die Hebelmechanik (30) mit einem der Kurbelarme (24, 26) oder dem Koppelteil (28) des Führungsgetriebes (8) verbunden ist.

6. Darmhalteeinrichtung (1) nach Anspruch 4 oder 5,
**dadurch gekennzeichnet, dass** die Hebelmechanik (30) zwei beweglich miteinander verbundene Hebelarme (32, 34) aufweist, wobei ein erster Hebelarm (32) mit einem Ende schwenkbar an einem ortsfesten Drehlager (36) angeordnet ist, und der zweite Hebelarm (34) mit seinem freien Ende drehbar mit dem Koppelteil (28) verbunden ist.

7. Darmhalteeinrichtung (1) nach einem der Ansprüche 4 bis 6,
**dadurch gekennzeichnet, dass** die Hebelmechanik (30) antriebsseitig mit einem manuell betätigbaren Handhebel (10) drehgebend gekoppelt ist.

8. Darmhalteeinrichtung (1) nach einem der Ansprüche 4 bis 7,
**dadurch gekennzeichnet, dass** mittels der Hebelmechanik (30) eine Kniehebel-Klemme zum Arretieren des Führungsgetriebes (8) in der Portionierposition (A) der Darmbremse (2) am Füllrohr (106) ausgebildet ist.

9. Darmhalteeinrichtung (1) nach Anspruch 8,
**dadurch gekennzeichnet, dass** zwischen der Hebelmechanik (30) und dem Handhebel (10) ein Übersetzungsgetriebe, bevorzugt ein Stirnradgetriebe, zwischengeschaltet ist.

10. Darmhalteeinrichtung (1) nach Anspruch 3 oder einem der vorstehenden Ansprüche 4 bis 9, wenn von Anspruch 3 abhängig,
**dadurch gekennzeichnet, dass** das Halteteil (4) einen Auslegerarm (12) und eine in der Portionierposition (A) etwa senkrecht zum Auslegerarm (12) verlaufende Kopfplatte (14) für die Darmbremse (2) umfasst.

11. Darmhalteeinrichtung (1) nach einem der vorstehenden Ansprüche,
**dadurch gekennzeichnet, dass** das Führungsgetriebe (8) in einem Kupplungsbereich (40) eines Auslegerarmes (12) angeordnet ist, der einen ersten feststehenden Armabschnitt (42) und einen mittels des Führungsgetriebes (8) relativ zum ersten Armabschnitt (42) beweglichen, zweiten Armabschnitt (44) aufweist.

12. Darmhalteeinrichtung (1) nach Anspruch 11, wenn von Anspruch 3 abhängig,
**dadurch gekennzeichnet, dass** an einander zugewandten Enden von erstem und zweitem Armabschnitt (42, 44) jeweils ein Kupplungsteil (46, 48) vorgesehen ist, mittels derer bevorzugt eine Steckkupplung zum Übertragen einer Antriebsbewegung auf die bevorzugt am Halteteil (4) beweglich aufgenommene Darmbremse (2) ausgebildet ist.

13. Darmhalteeinrichtung (1) nach Anspruch 1,
**dadurch gekennzeichnet, dass** die Verstelleinrichtung (6) zum Bewegen der Darmbremse (2) manuell betätigbar ausgebildet ist.

14. Vorrichtung (100) zum Füllen von schlauchförmigen Hüllen mit einer pastösen Masse, insbesondere von Darmraupen mit Wurstbrät, mit
- zumindest einem Füllrohr (106), auf das eine mit der Masse befüllbare Hülle aufziehbar ist, wobei das Füllrohrs (106) um seine Längsachse dreh- und antreibbar, gelagert ist, und
- einer Darmhalteeinrichtung (1) nach einem der Ansprüche 1 bis 13, welche beim Füllen der Hülle mit dem freien Ende des Füllrohres (106) in Kontakt steht.

15. Vorrichtung (100) nach Anspruch 14,
**gekennzeichnet durch** ein Rahmengestell (106), an dem die Darmhalteeinrichtung (1), bevorzugt mittels ihres Auslegerarmes (12), angeordnet ist,
und/oder der Auslegerarm (12) etwa parallel zum Füllrohr (106) ausgerichtet ist,
und/oder
- eine Abdreheinrichtung zum Antreiben der Darmbremse (2),
und/oder
- ein Fülltrichter (102) zum Aufnehmen der pastösen Masse, und/oder
- eine Förderpumpe zum Fördern der pastösen Masse vorgesehen ist.

## Claims

1. A casing holding device (1) for an apparatus for filling tubular cases with a pasty foodstuff material, comprising
- a casing brake (2) which in operation in a portioning position (A) is in contact with a case drawn on to a filling tube (106) and produces a pressing force between case and filling tube (106), and
- an adjusting device (6) for moving the casing brake (2) between the portioning position (A) and a casing change position (B) in which the casing brake (2) is uncoupled from the filling tube (106),
wherein the adjusting device (6) has a guide linkage (8) which has a plurality of links and which is adapted for the casing brake (2) in at least a first phase of the movement out of the portioning position (A) into the casing change position (B) to be moved substantially axially relative to the longitudinal axis of the filling tube (106) and to be pivoted in at least a second phase of the movement relative to the longitudinal axis of the filling tube (106),
**characterised in that** the guide linkage (8) is in the form of a four-link linkage (18) adapted to move the casing brake (2) on a predetermined curved path (20) with a substantially straight path portion (20') and a curved path portion (20").

2. A casing holding device (1) as set forth in claim 1
**characterised in that** the guide linkage (8) has at least a stationary frame (22), two crank arms (24, 26) which are respectively movably pivoted to the frame (2) by way of a rotary joint (23.1, 23.2) and a coupling portion (28) connecting the crank arms by way of two further rotary joints (23.3, 23.4).

3. A casing holding device (1) as set forth in claim 2
**characterised in that** the casing brake (2), preferably a movable holding portion (4) carrying the casing brake (2), is fixedly connected to the coupling portion (28) of the four-link linkage (18).

4. A casing holding device (1) as set forth in one of the preceding claims
**characterised in that** the adjusting device (6) has a lever mechanism (30) connected to the guide linkage (8) as an actuating unit for the guide linkage (8).

5. A casing holding device (1) as set forth in claim 4
**characterised in that** the lever mechanism (30) is connected to one of the crank arms (24, 26) or the coupling portion (28) of the guide linkage (8).

6. A casing holding device (1) as set forth in claim 4 or claim 5
**characterised in that** the lever mechanism (30) has two movably interconnected lever arms (32, 34), wherein a first lever arm (32) is arranged with one end pivotably at a stationary rotary mounting (36) and the second lever arm (34) is connected with its free end rotatably to the coupling portion (28).

7. A casing holding device (1) as set forth in one of claims 4 through 6
**characterised in that** the lever mechanism (30) is rotationally coupled at its drive side to a manually actuable hand lever (10).

8. A casing holding device (1) as set forth in one of claims 4 through 7
**characterised in that** a toggle lever clamp is provided by means of the lever mechanism (30) for arresting the guide linkage (8) in the portioning position (A) of the casing brake (2) on the filling tube (106).

9. A casing holding device (1) as set forth in claim 8
**characterised in that** a step-up transmission, preferably a spur gear transmission, is interposed between the lever mechanism (30) and the hand lever (10).

10. A casing holding device (1) as set forth in claim 3 or in one of the preceding claims 4 to 9, when dependent from claim 3
**characterised in that** the holding portion (4) has a cantilever arm (12) and a head plate (14) for the casing brake (2), the head plate extending in the portioning position (A) approximately perpendicularly to the cantilever arm (12).

11. A casing holding device (1) as set forth in one of the preceding claims
**characterised in that** the guide linkage (8) is arranged in a coupling region (40) of a cantilever arm (12) which has a first stationary arm portion (42) and a second arm portion (44) movable relative to the first arm portion (42) by means of the guide linkage (8).

12. A casing holding device (1) as set forth in claim 11, when dependent from claim 3
**characterised in that** provided at mutually facing ends of first and second arm portions (42, 44) is a respective coupling part (46, 48), by means of which preferably a plug coupling is provided for transmission of a drive movement to the casing brake (2) preferably mounted movably to the holding portion (4).

13. A casing holding device (1) as set forth in claim 1
**characterised in that** the adjusting device (6) is adapted to be manually actuable for movement of the casing brake (2).

14. Apparatus (100) for filling tubular cases with a pasty material, in particular sausage skin casings with sausagemeat, comprising
- at least one filling tube (106) on to which a case which can be filled with the material can be drawn, the filling tube (106) being mounted drivably and rotatably about its longitudinal axis, and
- a casing holding device (1) as set forth in one of claims 1 through 13, which is in contact with the free end of the filling tube (106) when filling the case.

15. Apparatus (100) as set forth in claim 14
**characterised by**
- a frame structure (106) to which the casing holding device (1) is arranged, preferably by means of its cantilever arm (12), and/or
- the cantilever arm (12) is oriented approximately parallel to the filling tube (106), and/or
- a twisting-off device for driving the casing brake (2), and/or
- a filling hopper (102) for receiving the pasty material, and/or
- a conveyor pump for conveying the pasty material.

## Revendications

1. Dispositif de maintien de boyau (1) pour un dispositif de remplissage d'enveloppes tubulaires avec une matière alimentaire pâteuse, avec
- un frein de boyau (2) qui, lors du fonctionnement dans une position de division en portions (A), est en contact avec une enveloppe enfilée sur un tube de remplissage (106) et produit une force de pression entre l'enveloppe et le tube de remplissage (106), et
- un dispositif de déplacement (6) pour le mouvement du frein de boyau (2) entre la position de division en portions (A) et une position de changement de boyau (B), dans laquelle le frein de boyau (2) est découplé du tube de remplissage (106), dans lequel le dispositif de déplacement (6) présente un engrenage de guidage (8) présentant plusieurs articulations, lequel est conçu pour que le frein de boyau (2) soit mû dans au moins une première phase du mouvement à partir de la position de division en portions (A) dans la position de changement de boyau (B) sensiblement axialement par rapport à l'axe longitudinal du tube de remplissage (106), et soit amené à pivoter dans au moins une deuxième phase du mouvement par rapport à l'axe longitudinal du tube de remplissage (106),
**caractérisé en ce**
**que** l'engrenage de guidage (8) est réalisé sous la forme d'un engrenage à quatre articulations (18), lequel est conçu pour mouvoir le frein de boyau (2) sur une trajectoire incurvée (20) prédéfinie avec une partie de trajectoire (20') sensiblement rectiligne et une partie de trajectoire (20'') courbée.

2. Dispositif de maintien de boyau (1) selon la revendication 1,
**caractérisé en ce que** l'engrenage de guidage (8) présente au moins un bâti (22) fixe, deux bras de manivelle (24, 26) articulés de manière mobile sur le bâti (22) respectivement par l'intermédiaire d'une articulation rotative (23.1, 23.2) et une partie d'accouplement (28) reliant les bras de manivelle par l'intermédiaire de deux autres articulations rotatives (23.3, 23.4).

3. Dispositif de maintien de boyau (1) selon la revendication 2,
**caractérisé en ce que** le frein de boyau (2), de préférence une partie de maintien (4) mobile, logeant le frein de boyau (2), est relié fixement à la partie d'accouplement (28) de l'engrenage à quatre articulations (18).

4. Dispositif de maintien de boyau (1) selon l'une quelconque des revendications précédentes,
**caractérisé en ce que** le dispositif de déplacement (6) présente un mécanisme de levier (30) relié à l'engrenage de guidage (8) comme unité d'actionnement pour l'engrenage de guidage (8).

5. Dispositif de maintien de boyau (1) selon la revendication 4,
**caractérisé en ce que** le mécanisme de levier (30) est relié à l'un des bras de manivelle (24, 26) ou la partie d'accouplement (28) de l'engrenage de guidage (8).

6. Dispositif de maintien de boyau (1) selon la revendication 4 ou 5,
**caractérisé en ce que** le mécanisme de levier (30) présente deux bras de levier (32, 34) reliés de manière mobile l'un à l'autre, dans lequel un premier bras de levier (32) est disposé avec une extrémité de manière pivotante sur un palier rotatif (36) de position fixe, et le deuxième bras de levier (34) est relié avec son extrémité libre de manière rotative à la partie d'accouplement (28).

7. Dispositif de maintien de boyau (1) selon l'une quelconque des revendications 4 à 6,
**caractérisé en ce que** le mécanisme de levier (30) côté entraînement est accouplé à un levier à main (10) pouvant être actionné manuellement de manière à transmettre la rotation.

8. Dispositif de maintien de boyau (1) selon l'une quelconque des revendications 4 à 7,
**caractérisé en ce qu'**un élément de serrage à genouillère pour bloquer l'engrenage de guidage (8) dans la position de division en portions (A) du frein de boyau (2) sur le tube de remplissage (106) est réalisé au moyen du mécanisme de levier (30).

9. Dispositif de maintien de boyau (1) selon la revendication 8,
**caractérisé en ce qu'**un engrenage multiplicateur, de préférence un engrenage cylindrique à denture droite, est intercalé entre le mécanisme de levier (30) et le levier à main (10).

10. Dispositif de maintien de boyau (1) selon la revendication 3 ou l'une quelconque des revendications précédentes 4 à 9, lorsqu'elles dépendent de la revendication 3,
**caractérisé en ce que** la partie de maintien (4) comprend un avant-bras (12) et une plaque supérieure (14) pour le frein de boyau (2) s'étendant dans la position de division en portions (A) sensiblement perpendiculairement à l'avant-bras (12).

11. Dispositif de maintien de boyau (1) selon l'une quelconque des revendications précédentes,
**caractérisé en ce que** l'engrenage de guidage (8) est disposé dans une zone d'accouplement (40) d'un avant-bras (12), qui présente une première partie de bras (42) fixe et une deuxième partie de bras (44) mobile par rapport à la première partie de bras (42) au moyen de l'engrenage de guidage (8).

12. Dispositif de maintien de boyau (1) selon la revendication 11, lorsqu'elle dépend de la revendication 3,
**caractérisé en ce que** respectivement une partie d'accouplement (46, 48), au moyen de laquelle de préférence un accouplement enfichable pour l'engrenage d'un mouvement d'entraînement sur le frein de boyau (2) logé mobile de préférence sur la partie de maintien (4) est réalisé, est prévue sur les extrémités tournées l'une vers l'autre de la première et deuxième partie de bras (42, 44).

13. Dispositif de maintien de boyau (1) selon la revendication 1,
**caractérisé en ce que** le dispositif de déplacement (6) est réalisé de manière à pouvoir être actionné manuellement pour le mouvement du frein de boyau (2).

14. Dispositif (100) pour le remplissage d'enveloppes tubulaires avec une matière pâteuse, en particulier de boyaux froncés avec de la chair à saucisse, avec
- au moins un tube de remplissage (106), sur lequel une enveloppe pouvant être remplie de la masse peut être enfilée, dans lequel le tube de remplissage (106) est logé de manière à pouvoir être amené en rotation et entraîné autour de son axe longitudinal, et
- un dispositif de maintien de boyau (1) selon l'une quelconque des revendications 1 à 13, lequel lors du remplissage de l'enveloppe est en contact avec l'extrémité libre du tube de remplissage (106).

15. Dispositif (100) selon la revendication 14,
**caractérisé par** un bâti de cadre (106), sur lequel le dispositif de maintien de boyau (1) est disposé, de préférence au moyen de son avant-bras (12),
et/ou l'avant-bras (12) est orienté sensiblement parallèlement au tube de guidage (106),
et/ou
- un dispositif de rotation pour l'entraînement du frein de boyau (2),
et/ou
- un entonnoir de remplissage (102) pour le logement de la matière pâteuse, et/ou
- une pompe de transport pour le transport de la matière pâteuse est prévue.
